# EUROPEAN PATENT SPECIFICATION

(11) **EP 2 477 761 B1**
(45) Date of publication and mention of the grant of the patent: **25.07.2018**
(21) Application number: 10757820.5
(22) Date of filing: 17.09.2010
(51) Int. Cl.: B08B 7/00, B29B 17/02

(54) **REMOVAL OF RESIN RESIDUE FROM BACKING SHEET**
ENTFERNUNG VON HARZRESTEN EINER ABZIEHFOLIE
ÉLIMINATION D'UN RÉSIDU DE RÉSINE D'UNE FEUILLE DE SUPPORT

(30) Priority: 18.09.2009 GB 0916366; 10.02.2010 GB 201002155
(43) Date of publication of application: 25.07.2012
(73) Proprietor: Techlan Limited, Swansea, South Wales SA3 3JR (GB)
(72) Inventor: THOMPSON, Mark, Swansea, South Wales SA3 3JR (GB); KIERNAN, Michael, Noel, Swansea, South Wales SA3 5BL (GB)
(74) Representative: Chapman IP
(86) International application number: PCT/GB2010/051560
(87) International publication number: WO 2011/033309

(56) References cited:
- CN-Y- 201 169 020
- DE-U1- 20 020 547
- JP-A- 2002 001 854
- JP-A- 2002 301 790
- JP-A- 2004 363 140
- SU-A1- 1 310 229

## Description

The present invention relates to the removal of resin residue from a backing sheet material such as paper, and in a preferred embodiment the removal of resin residue from a paper backing having a release coating, such as a silicone coating. The present invention further relates to the production of reinforced composites using recycled backing sheet materials from which resin residue has been removed

Heat curable (thermosettable) resins, such as epoxy resins and polyester resins, phenolic and epoxy resins, as well as high performance polymers such as polyimides and bis-maleimide polymers have a wide range of applications in the production of reinforced composite structures such as aircraft wings, wind turbine blades and the like. Thermosettable resins of this nature are frequently reinforced by carbon fibres or whiskers, glass fibres or the like.

In the manufacture of such composite structures, the resin is commonly supplied to the composite structure manufacturer in the form of a curable pre-preg, which is a combination of a fibre or whisker reinforcement (for example, of carbon fibres or whiskers or glass fibres, as referred to in the preceding paragraph), in a curable resin matrix. Such pre-pregs are generally produced in the form of rolls, achieved by the depositing of a quantity of thermosettable resin and reinforcement (the latter being typically laid as unidirectional reinforcement, or in the form of a fabric reinforcement) as a temporary coating on a backing sheet material. The backing sheet material is typically a paper sheet material coated with a release agent such as a silicone. Such a release coating is typically substantially free of discontinuities, such that pre-pregs deposited on the backing sheet material come into contact solely with the release coating.

The resin and reinforcement on the backing sheet are together passed through a series of rollers, thereby spreading the resin over the entire width of the backing sheet. Repeated rolling is performed to create the desired thickness of temporary resin coating in the pre-preg layer. Once the desired resin coating thickness has been achieved, the pre-preg layer is removed from the backing sheet material for coiling on to a delivery roll, from which it is subsequently unrolled when a composite product is to be manufactured.

Of the few currently available methods provided for the removal of laminated layers from backing sheets, information can be found in, for instance, JP-A-2004363140; SU-A1-1310229; DE-U1-20020547; and CN-Y-201169020.

It is currently common practice not to re-use such backing sheet materials, but to discard them after a single use, because they can frequently be contaminated by a residue of resin remaining on the surface.
Therefore a method of removing resin residue from a sheet material, without altering the integrity of the sheet material substrate or damaging the release agent, would enable reuse of the sheet material in the manufacture of further (pre-preg) resin sheets, thereby reducing the quantity of waste material in the industrial manufacturing process.

According to the invention, therefore, there is provided a process in accordance with claim 1. The heat softenable resin preferably has a minimum viscosity at an elevated temperature, and the heating is preferably to a temperature no more than 10°C above the temperature at which said resin has minimum viscosity.
Removal of the resin in this way permits re-use of the sheet material by re-application of fresh resin and the production of further pre-preg using the softenable resin as a matrix. The sheet material from which residual resin has been removed is therefore preferably reused by applying a further temporary coating layer for use in the production of reinforced composite material.

By sheet material, we mean herein a material having a length and breadth which is at least an order of magnitude greater than its thickness. Such sheet material may be substantially rigid, but it is preferably flexible - such that it can be rolled or coiled on a roller or drum.

The coated sheet material typically has a release coating thereon, for example, of a high temperature cured silicone coating material. The release coating preferably comprises a continuous barrier between the sheet material and the temporary coating layer which is to be applied thereto. The coated sheet material may be supplied in the form of a roll on a reel, drum or the like, as will be explained in more detail in the following description.

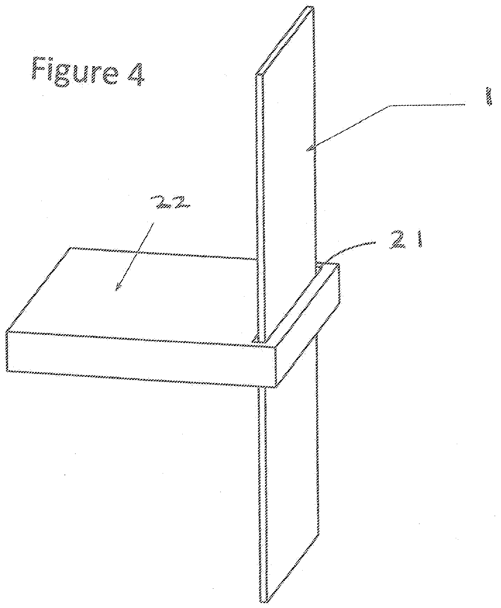

JP2002301790 discloses a release film constituted so that the release layer formed on the surface thereof can be easily separated and removed and the base material film thereof can be recovered and regenerated. JP2002001854 (Fuso Gosei) discloses heating of sheet material provided on a roll for the purpose of recovering PVC from a fibrous base cloth; there is no suggestion of use of such a method for application to a reusable backing sheet material such as that used according to the present invention.
It is preferred that the sheet material in the process according to the invention is moved relative to the heat source (for example, by unrolling the sheet material from a first reel and re-rolling the sheet material on to a take-up reel while the heat source and/or point of focus of the heat source remains static). In other embodiments the heat source and/or the point of focus of the heat source may be moved relative to the surface of the sheet material. Examples of suitable heat sources include infra-red radiation (for example provided by a heating element or laser irradiation); a hot air curtain, or a focussed microwave source. It is particularly preferred that the heat source is one which provides thermal energy which is selectively absorbed by the resin. Contacting heat sources, such as heated rollers, gas flames, or the like are not suitable for use in the method according to the invention.
When a focussed microwave source is used, it is preferred that the sheet material is allowed to pass through a waveguide to be irradiated by microwave energy (as is illustrated schematically in Figure 4 of the accompanying drawings, and will be described below).
In some embodiments of the present invention, the sheet material may be cooled either on the face obverse to that coated by the residual resin (especially when the latter resin is only on one face of the sheet material) or cooled downstream of treatment of the coating by the heat source.

The residual resin may be present on one or both surfaces of the sheet material. When residual resin is present on both surfaces, the process according to the invention may be used to remove the residual resin from one surface or from both surfaces. When the process is used to remove resin from both surfaces of the sheet material, the two surfaces may be treated either consecutively (for example, by turning over the sheet and re-running it past the heat source) or concurrently (using a first heat source directed at one surface and a second heat source, which may be the same as the first source or different thereto, directed at the opposite surface).
Heating of the residual resin causes the latter to soften and reduce in viscosity, leading to a change in its adherence to the sheet material. The increase in the temperature of the residual resin causes a corresponding decrease in the viscosity of the resin to an essentially liquefied state. Once the resin liquefies, it tends to form discrete droplets (as a result of surface tension effects) rather than an intractable thin solid layer; such droplets can easily be removed from the sheet material by one or more of several different removal methods, including suction, air pressure, mechanical scraping, or by the use of an absorbent body and optionally a scraper for the absorbent body, as a result of the effect of gravity, or by the application of a positive charge to the resin and the application of a negative charge to a plate or similar charge member downstream of the application of the charge being applied to the resin. A combination of these methods may be employed. Removal of the residual resin may be assisted by applying mechanical vibration to the sheet material or by applying sonic or ultrasonic treatment thereto, at the same time as one or more of the above removal methods is employed.
When an absorbent body is used to remove the liquefied droplets, the absorbent body may be in the form of absorbent sponge or cloth provided on a roller or the like, downstream of the heating station.

In order to remove the residual resin without causing damage or change either to the sheet material substrate or to the releasing agent, it is generally desirable to ensure accurate control of the temperature rise in the resin - that is, to a temperature not more than 10°C above the temperature at which the resin has a minimum viscosity, typically to a temperature within about 5°C of that minimum viscosity temperature.

Such control can be achieved by using a wavelength of infra-red radiation that is highly absorbed in the resin, thus allowing maximal temperature change with minimal input of energy. In addition, an optimal approach is to select a wavelength of light that has is minimally absorbed either by the substrate or by the release agent, which thus minimises temperature rise in the sheet material and release agent, thereby protecting both from thermal damage.

The present invention further comprises a preferred method of producing a reinforced composite in accordance with claim 11. The reinforcement in such a reinforced composite and in the pre-preg is typically of glass fibre, carbon fibres or ceramic whiskers.

The present disclosure further comprises sheet material from which residual resin has been removed by the method according to the invention, the sheet material being typically provided in rolled form on a drum or the like.
The thermally softenable resin used in the method according to the invention is typically one which is softenable under the influence of heat, and subsequently curable under the influence of heat (that is, it is thermosetting). Examples thereof include epoxy resins and polyester resins, as well as phenolic resins, epoxy resins, and high performance polymers such as bis-maleimide polymers and polyimides. Such resins decrease in viscosity with increased temperature to a minimum value, and then increase in viscosity as the temperature is increased further.

The heat source (such as a source of infra-red radiation) is preferably controlled such that the temperature induced is sufficient to lower the adherence properties of the resin, but maintained below a temperature which might cause damage either to the paper or to the resin. In particular, it is preferred that the resin is heated to a temperature of no more than 10°C above the temperature at which the resin has a minimum viscosity.

Preferred aspects of the invention will be further described, by way of example only, with reference to the accompanying drawings, in which:
Figure 1 shows a schematic typical cross-section of a coated paper for use in the process according to the invention, either carrying a temporary layer of pre-preg or resin - Fig 1(a), or in Fig 1 (b) with contaminating residual spots of resin after the majority of the layer of resin has been removed.
Figure 2 is a schematic cross-section showing exemplary features of operation of the method according to the invention.

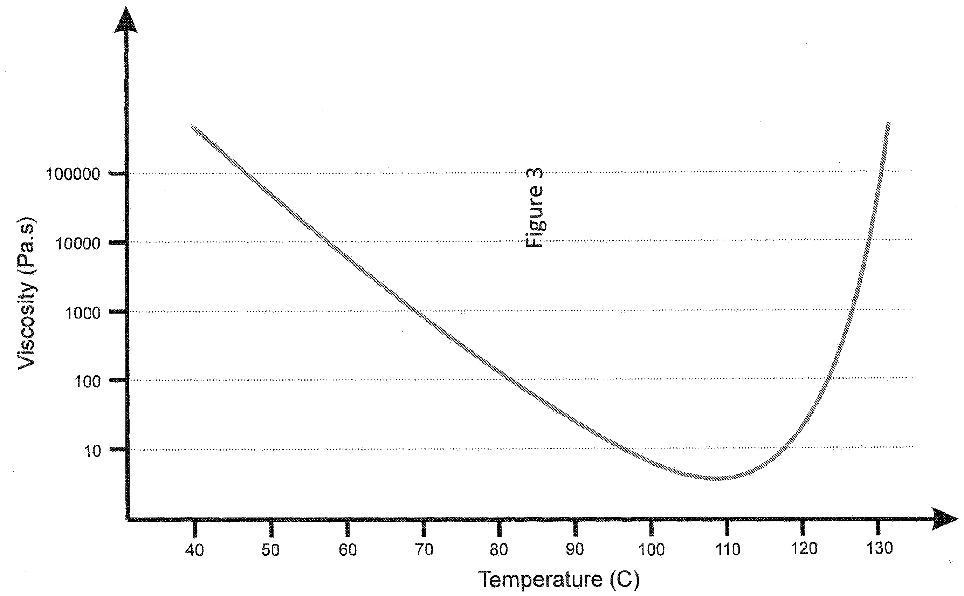

Figure 3 is a graph showing variation of viscosity of an exemplary polyester resin with temperature, showing that the resin has a minimum viscosity of about 5 Pa.sec at a temperature of about. In this embodiment, therefore, it is preferred that heat source should be controlled such that the resin does not exceed the temperature of about 110°C.
Figure 4 shows schematically an alternative heater relative to that of Figure 1, in which the heating is provided by a microwave source 21, 22.
Figures 5 (a), (b) and (c) show alternative sequences for cooling the heated sheet material.
Figure 6 shows schematically an arrangement where the resin is subjected to a positive charge before reaching the heating station.

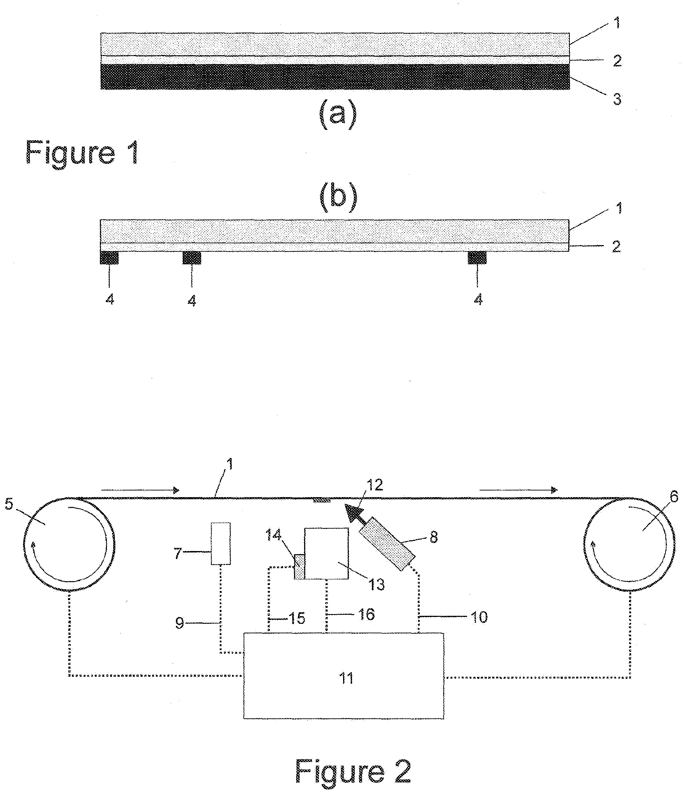

Referring to Figure 1(a), there is shown a paper sheet substrate 1 coated with a continuous release layer 2 of thermally resistant release agent, typically of a silicone coating. In the illustrated embodiment the release agent has only been applied to a single face of the paper, although in some embodiments, both faces may be coated with the release agent. A continuous layer 3 comprising thermally softenable resin-based pre-preg is present as a temporary coating on the release layer.

Figure 1(b) shows that after substantial removal of the temporary coating layer comprising thermally softenable resin, residual spots 4 of resin may remain as a contaminant on the surface of the release layer. Such spots 4 typically do not cover the entire surface of the release layer; they are commonly found towards the edges of the paper.

Figure 2 schematically shows a system for use in operating a process and method according to the invention. As illustrated, a paper sheet substrate 1 (with a release layer not shown on the undersurface thereof) is reeled from a feed roller 5 which rotates in a clockwise direction as shown to a collection roller 6 which also rotates in a clockwise direction. Thus the paper substrate moves from left to right in the embodiment illustrated.

The paper sheet substrate being unrolled from feed roller 5 is one from which the pre-preg layer comprising softenable resin, such as that shown as layer 3 in Fig 1(a), has been removed, leaving residual spots 4 of contaminating resin.

After leaving the feed roller 5, the undersurface of the paper sheet substrate 1 passes over an optional pre-heater 7. Downstream of the pre-heater 7 is positioned, in the embodiment illustrated, an infra-red source 8 directed towards the undersurface of the substrate 1 at an obtuse angle thereto. Pre-heater 7 and infra-red source 8 are connected via respective lines 9 and 10 to controller 11.

Infra-red source 8 is arranged to generate a beam 12 which impinges on a zone of the undersurface of the substrate 1; the zone may be in the form of a line or irradiated area. The beam may be directed so as to repeatedly scan the zone at high frequency, or it may be directed as a uniform beam covering the entire zone.

Between the pre-heater 7 and the infra-red source 8, directly below the irradiated zone, is located an open-topped collection vessel or hopper 13, which is itself provided with a heater 14 to keep the collected contents of the vessel in liquid state. The use of heater 14 is optional, but when used, it minimises the viscosity of the collected resin material thus allowing easy removal from the vessel 13. Heater 14 is itself connected to controller 11 via lines 15 and 16.

In operation in the illustrated embodiment, the infra-red source is operated either continuously or intermittently so as to heat the thermally softenable resin present as a residue or contaminant on the undersurface, allowing the thus heated and softened resin to detach from the undersurface and to drop under the influence of gravity into the collection vessel 13. The detachment of the softened resin may be aided by mechanical means (not shown) such as a blade, an air jet, or a vacuum or suction nozzle, or an absorbent body.

When such a blade is used, it is preferably arranged to scrape the surface of the substrate without damage; alternatively pressurised air may be directed towards the heated residue, the pressure of the air being used to blow the heated and softened resin off the undersurface of the substrate 1.

The infra-red source 8, which may be controlled via the control system 11, may be a source of incoherent radiation, such as an infra-red arc lamp, which may be located within a reflector which directs the output from the source towards the undersurface of the substrate 1. The wavelength emitted from the source 8 is in the infra-red region of the spectrum, typically employing multiple wavelengths or broad band of radiation in the range between 1000 and 3000nm.

Alternatively, the infra-red source may provide coherent radiation, typically of a selected wavelength. Such coherent radiation is typically provided by a laser, and is directed in use towards the undersurface of the substrate 1 via a suitable lens (not shown). Such a laser source may be, for example, a semiconductor laser diode arranged to emit light in the infra-red region of the spectrum, e.g. a laser diode operating at a selected output wavelength of 1450nm.

When a laser source is used, it will emit a selected wavelength of infra-red radiation, which wavelength may be matched to a known absorption wavelength for the residual resin.

In a further alternative, instead of an infra-red source, there may be provided alternative non-contact heating means such as a microwave heater 21, 22. When a pre-heater 7 is used, the power output requirement is minimised because less heating is required from the infra-red source.

In some embodiments of the present invention, after detaching the residual resin from the substrate, the heated resin may impinge on a source of cooled liquid (such as water) or an air jet or the like, thus cooling the resin and increasing its viscosity thereby hardening the resin and making removal from the processing environment easier.

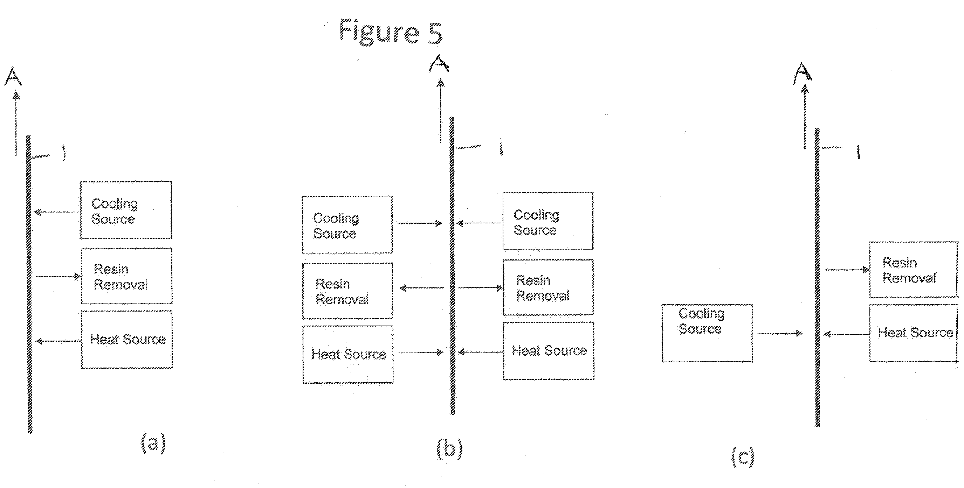

Examples of suitable arrangements are shown respectively in Figure 5, wherein in each of Figures 5(a) to 5(c) case, arrow A shows the direction of movement of the sheet. In Figure 5:
Figure 5(a) shows a heating station, followed by resin removal from sheet 1, followed by cooling of the face from which residue has been removed;
Figure 5(b) shows the same sequence but applied to both faces (in other words, resin residue is removed from both faces); and
Figure 5(c) shows cooling applied to the obverse face (in other words, a face other than the one which is directly heated so as to permit removal of softened resin residue therefrom.

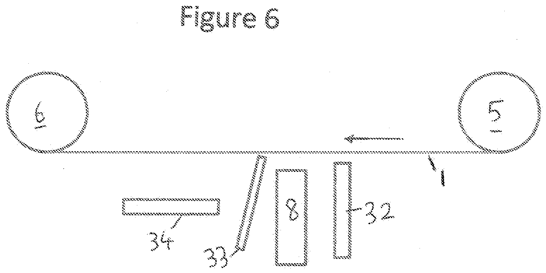

In the arrangement shown in Figure 6, substrate 1 is again unwound from feed roller 5 to collection roller 6 (as in Figure 2 except that unreeling is from the underside of roller 5 in the arrangement of Figure 6).

The undersurface of substrate 1 first passes a positive ion source 32 before reaching the heater 8; the substrate then carries past a negatively charged collection plate 33 and then a negative ion source 34. The initial charging with a positive ion source and then subsequent use of negative charging aids removal of residual resin from the underside of substrate 1.

## Claims

1. A process of removal of a temporary coating layer (3) from at least one surface of a sheet material (1), the temporary coating layer (3) comprising heat softenable resin and fibre reinforcement suitable production of a reinforced composite material, wherein the temporary coating layer (3) is substantially removed from said at least one surface but leaving residual resin (4) on said surface, **characterised in that** a non-contact heat source (8) is directed towards said residual resin (4) on said at least one surface so as to reduce the viscosity of said residual resin (4) on the respective surface to produce a reusable sheet material (1).

2. A process according to claim 1, wherein the reusable sheet material is reused by applying a further temporary coating layer comprising heat softenable resin and fibre reinforcement for use in the production of reinforced composite material.

3. A process according to claim 1 or 2, wherein said sheet material (1) is moved relative to the heat source (8).

4. A process according to claim 3, wherein said sheet material is supplied in the form of a roll on a first reel (5) and moved relative to the heat source (8) by unrolling the sheet material (1) from the first reel and re-rolling the reusable sheet material (1) on to a take-up reel (6).

5. A process according to any of claims 1 to 4, wherein the heat source (8) comprises infra-red radiation provided by a heating element.

6. A process according to any of claims 1 to 4, wherein the heat source (8) comprises a laser.

7. A process according to any of claims 1 to 6, wherein the sheet material (1) is cooled either on a surface obverse to a surface having the residual resin (4) thereon, or downstream of the surface heated by the heat source (8).

8. A process according to any of claims 1 to 6, wherein the sheet material has the temporary coating layer on both surfaces thereof, such that residual resin also remains on both said surfaces after said temporary coating layers are substantially removed.

9. A process according to any of claims 1 to 8, wherein said residual resin of reduced viscosity is detached from the sheet material (1) under suction, gravity, air pressure, mechanical scraping, the use of an absorbent body or an electrical charge.

10. A process according to any of claims 1 to 9, wherein the sheet material (1) comprises a release coated paper.

11. A method of producing a reinforced composite using the process of claim 1, wherein the method comprises
(a) providing a sheet material (1), such as release coated paper, having thereon a temporary coating layer (3) comprising thermally softenable resin and fibre reinforcement on at least one surface of said sheet material (1),
(b) substantially removing the temporary coating layer (3) from the or each surface of the sheet material (1) leaving residual resin (4) on the respective surface, and
(c) using the removed coating layer in the manufacture of a reinforced composite; **characterised in that** the viscosity of the residual resin (4) on the respective surface is reduced by directing a non-contact heat source (8) towards said surface and **in that** the residual resin of reduced viscosity is detached from the respective surface to produce a reusable sheet material.

12. A method according to claim 11, wherein said reusable sheet material has a further temporary coating layer applied thereto and is recycled to said step (a).

13. A method according to claim 11 or 12, in which the heat source comprises infra-red radiation provided by a heating element or a laser.

14. A method according to any of claims 11 to 13, wherein said residual resin of reduced viscosity is detached from the sheet material under suction, gravity, air pressure, mechanical scraping, the use of an absorbent body or an electrical charge.

15. A method according to any of claims 11 to 14, wherein the sheet material has the temporary coating layer on both surfaces thereof, such that residual resin also remains on both said surfaces after said temporary coating layers have been substantially removed.

## Patentansprüche

1. Prozess des Entfernens einer temporären Überzugsschicht (3) von wenigstens einer Fläche eines Folienmaterials (1), wobei die temporäre Überzugsschicht (3) wärmeerweichbares Harz und eine Faserverstärkung umfasst, die zum Produzieren eines verstärkten Verbundmaterials geeignet ist, wobei die temporäre Überzugsschicht (3) im Wesentlichen von der genannten wenigstens einen Fläche entfernt wird, aber Restharz (4) auf der genannten Fläche zurückbleibt, wobei eine kontaktlose Wärmequelle (8) auf das genannte Restharz (4) auf der genannten wenigstens einen Fläche gerichtet wird, um die Viskosität des genannten Restharzes (4) auf der jeweiligen Fläche zu reduzieren, um ein wiederverwendbares Folienmaterial (1) zu produzieren.

2. Prozess nach Anspruch 1, wobei das wiederverwendbare Folienmaterial durch Aufbringen einer weiteren temporären Überzugsschicht wiederverwendet wird, die wärmeerweichbares Harz und eine Faserverstärkung umfasst, zur Verwendung bei der Produktion von verstärktem Verbundmaterial.

3. Prozess nach Anspruch 1 oder 2, wobei das genannte Folienmaterial (1) relativ zu der Wärmequelle (8) bewegt wird.

4. Prozess nach Anspruch 3, wobei das genannte Folienmaterial in Form einer Rolle auf einer ersten Trommel (5) zugeführt und relativ zur Wärmequelle (8) durch Abrollen des Folienmaterials (1) von der ersten Trommel und Wiederaufrollen des wiederverwendbaren Folienmaterials (1) auf eine Aufnahmetrommel (6) bewegt wird.

5. Prozess nach einem der Ansprüche 1 bis 4, wobei die Wärmequelle (8) von einem Heizelement bereitgestellte Infrarotstrahlung beinhaltet.

6. Prozess nach einem der Ansprüche 1 bis 4, wobei die Wärmequelle (8) einen Laser umfasst.

7. Prozess nach einem der Ansprüche 1 bis 6, wobei das Folienmaterial (1) entweder auf einer Fläche gegenüber einer Fläche mit dem Restharz (4) darauf oder unterhalb der von der Wärmequelle (8) erhitzten Oberfläche gekühlt wird.

8. Prozess nach einem der Ansprüche 1 bis 6, wobei das Folienmaterial die temporäre Überzugsschicht auf beiden Flächen davon aufweist, so dass Restharz auch auf beiden genannten Flächen zurückbleibt, nachdem die genannten temporären Überzugsschichten im Wesentlichen entfernt sind.

9. Prozess nach einem der Ansprüche 1 bis 8, wobei das genannte Restharz von reduzierter Viskosität von dem Folienmaterial (1) unter Saugung, Schwerkraft, Luftdruck, mechanischem Schaben, der Verwendung eines absorptionsfähigen Körpers oder einer elektrischen Ladung abgelöst wird.

10. Prozess nach einem der Ansprüche 1 bis 9, wobei das Folienmaterial (1) ein trennbeschichtetes Papier umfasst.

11. Verfahren zum Produzieren eines verstärkten Verbundmaterials mit dem Prozess nach Anspruch 1, wobei das Verfahren Folgendes beinhaltet:
(a) Bereitstellen eines Folienmaterials (1) wie ein trennbeschichtetes Papier, auf dem sich eine temporäre Überzugsschicht (3) befindet, die thermisch erweichbares Harz und Faserverstärkung auf wenigstens einer Fläche des genannten Folienmaterials (1) umfasst,
(b) im Wesentlichen Entfernen der temporären Überzugsschicht (3) von der oder jeder Fläche des Folienmaterials (1), wobei Restharz (4) auf der jeweiligen Fläche zurückbleibt, und
(c) Benutzen der entfernten Überzugsschicht bei der Herstellung eines verstärkten Verbundmaterials; **dadurch gekennzeichnet, dass** die Viskosität des Restharzes (4) auf der jeweiligen Fläche durch Leiten einer kontaktlosen Wärmequelle (8) auf die genannte Oberfläche reduziert wird, und dadurch, dass das Restharz mit reduzierter Viskosität von der jeweiligen Fläche abgelöst wird, um ein wiederverwendbares Folienmaterial zu produzieren.

12. Verfahren nach Anspruch 11, wobei auf das genannte wiederverwendbare Folienmaterial ferner eine temporäre Überzugsschicht aufgebracht wird und es zu dem genannten Schritt (a) recycliert wird.

13. Verfahren nach Anspruch 11 oder 12, wobei die Wärmequelle von einem Heizelement oder einem Laser bereitgestellte Infrarotstrahlung umfasst.

14. Verfahren nach einem der Ansprüche 11 bis 13, wobei das genannte Restharz mit reduzierter Viskosität von dem Folienmaterial unter Saugung, Schwerkraft, Luftdruck, mechanischem Schaben, der Verwendung eines absorptionsfähigen Körpers oder einer elektrischen Ladung abgelöst wird.

15. Verfahren nach einem der Ansprüche 11 bis 14, wobei das Folienmaterial die temporäre Überzugsschicht auf beiden Flächen davon aufweist, so dass Restharz auch auf beiden genannten Flächen zurückbleibt, wenn die genannten temporären Überzugsschichten im Wesentlichen entfernt wurden.

## Revendications

1. Un processus d'élimination d'une couche de revêtement temporaire (3) d'au moins une surface d'un matériau en feuilles (1), la couche de revêtement temporaire (3) comprenant une résine pouvant se ramollir sous l'effet de la chaleur et un renfort de fibres approprié pour la production d'un matériau composite renforcé, dans lequel la couche de revêtement temporaire (3) est substantiellement éliminée de ladite au moins une surface mais laisse des traces de résine résiduelle (4) sur ladite surface, dans lequel une source de chaleur sans contact (8) est orientée vers ladite résine résiduelle (4) sur ladite au moins une surface de façon à réduire la viscosité de ladite résine résiduelle (4) sur la surface respective de façon à produire un matériau en feuilles (1) réutilisable.

2. Un processus selon la revendication 1, dans lequel le matériau en feuilles réutilisable est réutilisé pour appliquer une couche de revêtement temporaire supplémentaire comprenant de la résine pouvant se ramollir sous l'effet de la chaleur et un renfort de fibres utilisé dans le cadre de la production d'un matériau composite renforcé.

3. Un processus selon les revendications 1 ou 2, dans lequel ledit matériau en feuilles (1) est déplacé en fonction de la source de chaleur (8).

4. Un processus selon la revendication 3, dans lequel ledit matériau en feuilles est fourni sous la forme d'un rouleau sur une première bobine (5) et déplacé par rapport à la source de chaleur (8) en déroulant le matériau en feuilles (1) de la première bobine et en enroulant à nouveau le matériau en feuilles (1) réutilisable sur une bobine réceptrice (6).

5. Un processus selon l'une des revendications 1 à 4, dans lequel la source de chaleur (8) comprend des rayonnements infrarouges fournis par un élément de chauffage.

6. Un processus selon l'une des revendications 1 à 4, dans lequel la source de chaleur (8) comprend un laser.

7. Un processus selon l'une des revendications 1 à 6, dans lequel le matériau en feuilles (1) est refroidi sur une surface à l'avers d'une surface portant la résine résiduelle (4), ou en amont de la surface chauffée par la source de chaleur (8).

8. Un processus selon l'une des revendications 1 à 6, dans lequel le matériau en feuilles dispose d'une couche de revêtement temporaire des deux côtés, de façon à ce qu'il reste aussi de la résine résiduelle sur les deux dites surfaces après élimination substantielle desdites couches de revêtement temporaires.

9. Un processus selon l'une des revendications 1 à 8, dans lequel ladite résine résiduelle à la viscosité réduite est détachée du matériau en feuilles (1) sous l'effet de la succion, de la gravité, de la pression de l'air, d'un grattage mécanique, de l'utilisation d'un corps absorbant ou d'une charge électrique.

10. Un processus selon l'une des revendications 1 à 9, dans lequel le matériau en feuilles (1) comprend un papier couché anti-adhésif.

11. Une méthode de production d'un composite renforcé en utilisant le processus de la revendication 1, la méthode comprenant
(a) la fourniture d'un matériau en feuilles (1) tel que du papier couché anti-adhésif, sur lequel a été appliquée une couche de revêtement temporaire (3) comprenant de la résine pouvant être ramollie thermiquement et un renfort de fibres sur au moins une surface dudit matériau en feuilles (1).
(b) l'élimination substantielle de la couche de revêtement temporaire (3) de la surface ou de chaque surface du matériau en feuilles (1) en laissant de la résine résiduelle (4) sur la surface respective, et
(c) l'utilisation de la couche de revêtement retirée dans le cadre de la fabrication d'un composite renforcé ; **caractérisée en ce que** la viscosité de la résine résiduelle (4) sur la surface respective est réduite en orientant une source de chaleur sans contact (8) vers ladite surface et **en ce que** la résine résiduelle à viscosité réduite est détachée de la surface respective pour produire un matériau en feuilles réutilisable.

12. Une méthode selon la revendication 11, dans laquelle ledit matériau en feuilles réutilisable se voit appliquer un surcroit de couche de revêtement temporaire et est recyclé en ladite étape (a).

13. Une méthode selon les revendications 11 ou 12, dans laquelle la source de chaleur comprend des rayonnements infrarouges fournis par un élément de chauffage ou un laser.

14. Une méthode selon l'une des revendications 11 à 13, dans laquelle ladite résine résiduelle à la viscosité réduite est détachée du matériau en feuilles sous l'effet de la succion, de la gravité, de la pression de l'air, d'un grattage mécanique, de l'utilisation d'un corps absorbant ou d'une charge électrique.

15. Une méthode selon l'une des revendications 11 à 14, dans lequel le matériau en feuilles dispose d'une couche de revêtement temporaire des deux côtés, de façon à ce qu'il reste aussi de la résine résiduelle sur les deux dites surfaces après élimination substantielle desdites couches de revêtement temporaires.
